# EUROPÄISCHE PATENTSCHRIFT

(11) **EP 1 664 495 B1**
(45) Veröffentlichungstag und Bekanntmachung des Hinweises auf die Patenterteilung: **11.03.2015**
(21) Anmeldenummer: 04765100.5
(22) Anmeldetag: 11.09.2004
(51) Int. Cl.: F01N 3/022

(54) **PARTIKELFILTER FÜR EINEN VERBRENNUNGSMOTOR**
PARTICULATE FILTER FOR AN INTERNAL COMBUSTION ENGINE
FILTRE A PARTICULES POUR MOTEUR A COMBUSTION INTERNE

(30) Priorität: 16.09.2003 DE 10343046
(43) Veröffentlichungstag der Anmeldung: 07.06.2006
(60) Teilanmeldung: 10188401.3
(73) Patentinhaber: Deutsches Zentrum für Luft- und Raumfahrt e.V., 51147 Köln (DE)
(72) Erfinder: HOFFSCHMIDT, Bernhard, 51467 Bergisch Gladbach (DE); FEND, Thomas, 51143 Köln (DE); MIEBACH, Rolf, 50321 Brühl (DE)
(74) Vertreter: Von Kreisler Selting Werner - Partnerschaft von Patentanwälten und Rechtsanwälten mbB
(86) Internationale Anmeldenummer: PCT/EP2004/010177
(87) Internationale Veröffentlichungsnummer: WO 2005/033477

(56) Entgegenhaltungen:
- EP-A- 0 318 958
- DE-A- 3 043 996
- JP-A- 62 225 221

## Beschreibung

Die Erfindung betrifft einen Partikelfilter für einen Verbrennungsmotor, mit einem monolithischen porösen Filterkörper, der Zuströmkanäle und Abströmkanäle aufweist, wobei jeder Zuströmkanal mindestens einen Abströmkanal kreuzt, von dem er durch eine Filterwand getrennt ist.

Es ist bekannt, die Abgase von Dieselmotoren durch einen Rußfilter zu leiten, der die Feststoffpartikel zurückhält. Der Ruß, der sich in dem Rußfilter sammelt, wird in Intervallen zu Asche verbrannt. Derartige Rußfilter haben eine Betriebstemperatur in der Größenordnung von 500°C. Für ihre Herstellung stehen Keramiken und Sinterkörper zur Verfügung. Herkömmliche Partikelfilter bestehen aus einem monolithischen Filterkörper aus porösem Material, der längslaufende Kanäle enthält. Diese Kanäle sind abwechselnd an dem einen und an dem gegenüberliegenden anderen Ende geschlossen. Jeweils zwei benachbarte Kanäle bilden einen Zuströmkanal und einen Abströmkanal. Der Filterstrom geht durch die Wand hindurch, welche die beiden Kanäle voneinander trennt. Das bisher einzig für Keramiken zur Verfügung stehende Herstellungsverfahren arbeitet mit Extrusion einer keramischen Masse. Hierbei sind nur Profilstrukturen der Kanäle realisierbar, bei denen die Zuströmkanäle und die Abströmkanäle parallel zueinander verlaufen. An einem Ende ist der jeweilige Kanal durch gezielte Deformierung der Kanalwand verschlossen.

Dies beruht auf der Tatsache, dass bei größeren Abmessungen größere Temperaturdifferenzen und damit größere thermische Spannungen auftreten. Dies bedeutet, dass ein Rußfilter, der für einen Kleinwagen geeignet ist, nicht durch bloße Maßstabsvergrößerung in eine für größere Personenwagen oder gar Lastwagen geeignete Größe gebracht werden kann. Schließlich existiert keine wartungsfreundliche und kompakte Lösung für die Entnahme der bei dem Verbrennungsprozess anfallenden Asche.

In DE 30 43 996 A1 ist ein abgasdurchströmter Schwebeteilchenfilter für Dieselmaschinen beschrieben. Der Schwebeteilchenfilter ist in einem rohrförmigen Gehäuse hinter dem Abgassammelkasten in einer Abgasleitung angeordnet. Der Schwebeteilchenfilter weist innerhalb des Gehäuses ein keramisches Filterelement in Form eines Monolithen auf, der Zuströmkanäle und Abströmkanäle enthält. Die Einlasskanäle verlaufen in mehreren parallelen Ebenen parallel zueinander und die Auslasskanäle verlaufen in den dazwischenliegenden Ebenen, so dass sie die Einlasskanäle kreuzen. Der Monolith ist in das Gehäuse so eingebaut, dass die Auslasskanäle in der Lotrechten liegen und ihre oberen Enden verschlossen sind, während die unteren Enden Verbindung mit dem Auslassrohr haben. Die Einlasskanäle sind an beiden Enden offen und nehmen von den entgegengesetzten Seiten her die Abgase von Abgassammelkästen des Motors auf. Die Rußpartikel verbleiben somit in den Einlasskanälen.

Einen weiterer Partikelfilter ist beschrieben in EP 0 318 958 A2. Dieser Partikelfilter enthält in einem Gehäuse einen monolithischen porösen Filterkörper, der quer zur Längsrichtung des Gehäuses verlaufende Zuströmkanäle und in Längsrichtung des Gehäuses verlaufende Abströmkanäle aufweist. Am Zuströmende ist das Gehäuse geschlossen bis auf eine Einströmöffnung, die außerhalb der Kontur des Filterkörpers angeordnet ist und in einen Zuströmraum mündet. Ein Ascheraum befindet sich unterhalb des Filterkörpers. Dieser Ascheraum weist einen Auslass zum Austragen der Asche auf.

JP 62225221 offenbart einen Partikelfilter nach dem Oberbegriff von Anspruch 1.

Der Erfindung liegt die Aufgabe zugrunde, einen Partikelfilter für einen Verbrennungsmotor zu schaffen, der imstande ist, große Abgasströme, die mit oxidierbaren Partikeln beladen sind, zu reinigen.

Der erfindungsgemäße Partikelfilter weist die Merkmale des Patentanspruchs 1 auf.

Bei dem erfindungsgemäßen Filter geht der Gasweg durch die poröse Wand zwischen einem Zuströmkanal und mehreren Abströmkanälen hindurch, während die Asche in dem Zuströmkanal verbleibt und kontinuierlich oder in einem gesonderten Reinigungsprozess aus diesem herausgeführt werden kann. An dem Auslassende der Zuströmkanäle wird ein Gegendruck aufgebaut, um zu bewirken, dass die Gase durch die porösen Wände hindurchgehen, Der Gegendruck wird dadurch erzeugt, dass die Zuströmkanäle in eine geschlossene Kammer münden. Der Ascheraum, in dem die Asche gesammelt wird, kann so groß gewählt werden, dass er imstande ist, über die Lebensdauer des Filters alle Asche aufzunehmen. Alternativ hierzu kann der Ascheraum auch eine Reinigungsöffnung aufweisen, durch die Asche herausgeführt werden kann.

Die einander kreuzenden Zuström- und Abströmkanäle bewirken, dass der Abgasstrom von jedem Zuströmkanal auf mehrere Abströmkanäle verteilt wird. Die Zuströmkanäle haben nicht nur offene Einlässe, sondern auch offene Auslässe. Die in ihnen enthaltenen Partikel können somit zum Auslass transportiert werden. Die Zuströmkanäle bilden für die entstehenden Aschepartikel keine Sackgasse. Damit ist es möglich, die Poren weitgehend freizuhalten und ein Zusetzen des Filters zu vermeiden oder zeitlich hinauszuschieben.

Erfindungsgemäß ist ferner vorgesehen, dass die Zuströmkanäle Rohre sind, die ohne gegenseitige Wandberührung durch Kammern hindurchgehen, welche die Abström näle bilden. Damit wird erreicht, dass die gesamte Umfangsfläche der Zuströmkanäle als Filterfläche zur Verfügung steht. Auf diese Weise wird in einem Volumen eine relativ große Filterfläche realisiert.

Während konventionelle Filter bei der Regeneration den Nachteil haben, dass es im Endbereich des Filters zu stark überhöhten Temperaturen kommen kann, wird dieser Effekt bei der Erfindung vermieden. Durch die sich kreuzenden Strömungswege entsteht keine den Filter durchlaufende Wärmewelle.

Der Filterkörper kann wegen der sich kreuzenden Kanäle nicht in einem Profilfertigungsverfahren durch Extrudieren u.dgl. hergestellt werden. Die Kanalwände bestehen aus porösen Keramiken (SiC, Al₂O₃ ...) oder metallischen Sintermaterialien, die beim Durchströmen von Gasen die mitgeführten Feststoffpartikel auffangen und aus den Gasen herausfiltern. Das durch die Wand hindurchtretende Gas wird unter einem Winkel > 1° zu den Zuströmkanälen aus dem monolithischen Festkörper abgeführt. Das Kreuzen von Zuströmkanälen und Abströmkanälen bedeutet, dass die Strömungen einen beliebigen Winkel zueinander haben, der von Null verschieden ist.

Die Zuströmkanäle und/oder die Abströmkanäle können jegliche Querschnittsform haben, z.B. runden, dreieckigen oder viereckigen Querschnitt.

Die Herstellung des komplexen monolithischen Filterkörpers kann nach speziellen Herstellungsverfahren erfolgten, z.B. im Direct Typing Process, bei welchem mittels einer Siebdruckmaschine Schichten aus pastösen Materialien, die unterschiedliche Muster haben, übereinander geschichtet werden.

Im Folgenden werden unter Bezugnahme auf die Zeichnungen Ausführungsbeispiele der Erfindung näher erläutert. Diese Erläuterung ist nicht dahingehend zu verstehen, dass sie den Schutzbereich der Erfindung verringert. Dieser wird vielmehr durch die Patentansprüche bestimmt.

Es zeigen:
- Fig. 1: eine schematische Darstellung eines Längsschnittes durch eine Ausführungsform eines Partikelfilters,
- Fig. 2: einen Schnitt entlang der Linie II-II von Figur 1, und
- Fig. 3: eine perspektivische schematische Darstellung einer erfindungsgemäßen Ausführungsform des Partikelfilters, bei der die Zuströmkanäle durch Kammern hindurchgehen.

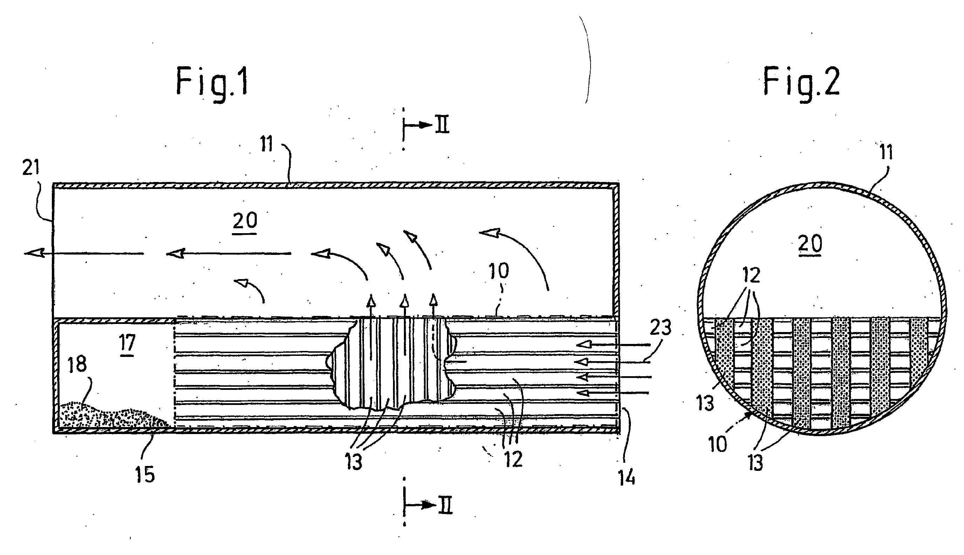

Der in den Figuren 1 und 2 dargestellte Partikelfilter ist ein Rußfilter für einen Dieselmotor. Er besteht aus einem einstückigen porösen Filterkörper 10, der in einem Rohr 11 untergebracht ist und beispielsweise eine Rohrhälfte ausfüllt. Der Filterkörper 10 besteht aus einem porösen Material, insbesondere aus Keramik oder Sintermetall. Er hat eine hohe Temperaturbeständigkeit von mindestens 1500°C.

In dem Filterkörper 10 sind zahlreiche längslaufende Zuströmkanäle 12 ausgebildet, die in Figur 2 hell dargestellt sind. Die Zuströmkanäle haben hier rechteckigen Querschnitt und sie sind durch Umfangswände begrenzt. Jeweils eine Gruppe von Zuströmkanälen 12 ist in einer gemeinsamen Ebene angeordnet. Zwischen zwei benachbarten Ebenen von Zuströmkanälen 12 befindet sich jeweils eine Ebene von Abströmkanälen 13. Die Zuströmkanäle und die Abströmkanäle sind so angeordnet, dass sie sich gegenseitig kreuzen. Bei dem vorliegenden Ausführungsbeispiel verlaufen sie rechtwinkelig zueinander. Zwischen einer Gruppe von Zuströmkanälen 12 und einem Abströmkanal 13 befinden sich Filterwände. Von den vier Wänden, die einen Zuströmkanal 12 begrenzen, wirken bei diesem Partikelfilter nur zwei Wände als Filterwände, nämlich diejenigen Wände, die den Zuströmkanal 12 von den angrenzenden Abströmkanälen 13 trennen. Die beiden anderen Wände üben keine Filterfunktion aus.

Die Zuströmkanäle 12 erstrecken sich geradlinig durch den Filterkörper 10 hindurch von einem Einlassende 14 bis zu einem Auslassende 15. In dem rohrförmigen Gehäuse 11 ist im Anschluss an das Auslassende 15 ein druckdicht geschlossener Beruhigungsraum 17 vorgesehen, bei dem es sich um einen Ascheraum handelt. In dem Beruhigungsraum wird die Strömungsgeschwindigkeit stark reduziert und die Asche abgelagert. Die Zuströmkanäle 12 münden in den Raum 17, in dem sich ein Druck aufbaut. Dort sammelt sich auch die Asche 18, die in den Zuströmkanälen 12 entstanden ist und infolge von Vibrationen zu dem Raum 17 gelangt ist. Der Raum 17 kann eine Klappe zum Entfernen der Asche 18 enthalten.

Über dem Filterkörper 10 befindet sich in dem Gehäuse 11 ein Raum 20, der sich über die gesamte Länge des Gehäuses 11 erstreckt. In diesen Raum 20 münden die Ausströmkanäle 13 des Filterkörpers 10. Der Raum 20 weist eine Auslassöffnung 21 auf, durch die die gereinigten Gase ausströmen.

Beim Betrieb als Rußfilter werden die Fahrzeugabgase, die durch die Pfeile 23 bezeichnet sind, den Zuströmkanälen 12 zugeführt. Im Filterkörper 10 setzt sich der Ruß ab, während die Gase durch die Filterwände in die Abströmkanäle 13 und von dort in die Kammer 20 strömen.

Zur Regenerierung des Filterkörpers 10 wird dieser erhitzt, so dass der Ruß oxidiert und zu Asche verbrennt. Dadurch werden die Poren der Filterwände wieder frei. Die Asche gelangt durch Vibrationen des Fahrzeugs und unter der Wirkung der Gasströmung in den Raum 17.

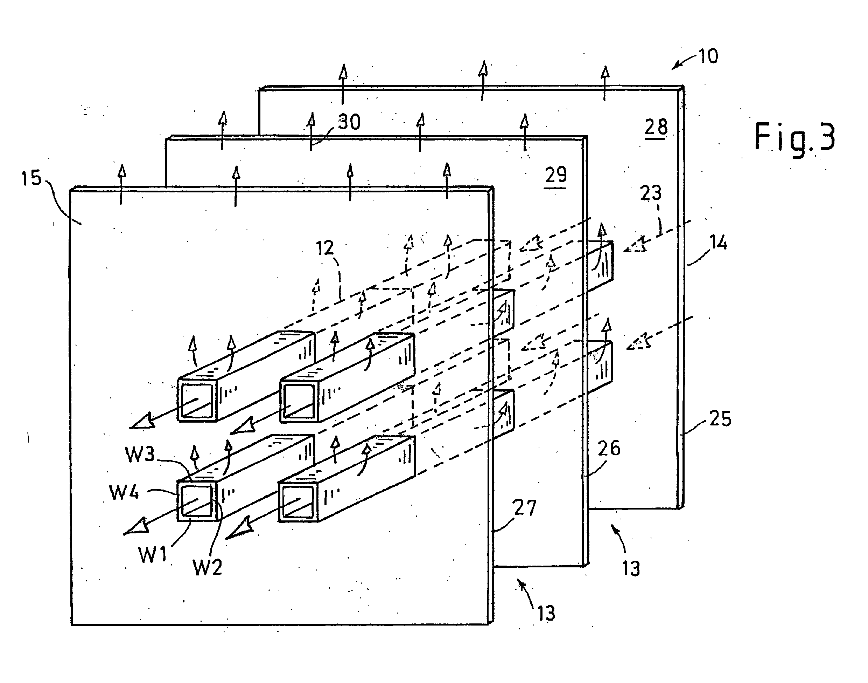

Während bei der zuvor beschriebenen Ausführungsform eines Partikelfilters nur zwei der vier Wände eines jeden Zuströmkanals 12 als Filterwände wirken, sind bei dem erfindungsgemäßen Ausführungsbeispiel von Figur 3 sämtliche vier Wände Filterwände. Bei diesem Ausführungsbeispiel verlaufen die Zuströmkanäle 12 in Form rechteckiger Rohre von einem Einlassende 14 zu einem Auslassende 15. Das Auslassende 15 führt zu einer (nicht dargestellten) geschlossenen Kammer, die als Aschekammer ausgebildet sein kann.

Über die Länge der Zuströmkanäle 12 ist der Filterkörper durch quer verlaufende Wände 25,26 und 27 in Kammern 28,29 unterteilt, die die Abströmkanäle 13 bilden. Die gereinigten Gase 30 verlassen den Filterkörper und gelangen in einen (nicht dargestellten) Sammelraum.

Man erkennt in Figur 3, dass jeder Zuströmkanal vier Filterwände W1,W2,W3 und W4 aufweist. Dies ist dadurch möglich, dass die rohrförmigen Zuströmkanäle 12 gegenseitige Abstände haben. Die Wände 25,26 und 27 dienen auch dazu, die Zuströmkanäle 12 mechanisch zu halten.

Die Funktion des Rußfilters nach Figur 3 ist gleich wie diejenige der zuvor beschriebenen Ausführungsform eines Partikelfilters, so dass eine nochmalige Funktionsbeschreibung unterbleibt.

## Patentansprüche

1. Partikelfilter für einen Verbrennungsmotor, mit einem monolithischen porösen Filterkörper (10), der Zuströmkanäle (12) und Abströmkanäle (13) aufweist, wobei jeder Zuströmkanal (12) mindestens einen Abströmkanal (13) kreuzt, von dem er durch eine Filterwand (W1, W2, W3, W4) getrennt ist, und die Zuströmkanäle (12) in einen Beruhigungsraum (17) münden, der ein Ascheraum zur Ablagerung der Asche ist,
wobei der Filterkörper (10) in einem rohrförmigen Gehäuse (11) angeordnet ist, in welchem die Zuströmkanäle (12) in Längsrichtung des Gehäuses verlaufen, und dass die Abströmkanäle (13) in einen Raum (20) des Gehäuses (11) seitlich neben dem Filterkörper (10) münden, der sich über die gesamte Länge des Gehäuses (11) erstreckt,
**dadurch gekennzeichnet,**
**dass** die Zuströmkanäle (12) Rohre sind, die ohne gegenseitige Wandberührung durch Kammern (28, 29) hindurchgehen, welche die Abströmkanäle (13) bilden.

2. Partikelfilter nach Anspruch 1, **dadurch gekennzeichnet, dass** in dem rohrförmigen Gehäuse (11) der Beruhigungsraum (17) im Anschluss an das Auslassende (15) des Filterkörpers (10) angeordnet ist.

3. Partikelfilter nach Anspruch 1 oder 2, **dadurch gekennzeichnet, dass** jeder Abströmkanal (13) mehrere Zuströmkanäle (12) kreuzt.

4. Partikelfilter nach einem der Ansprüche 1 - 3, **dadurch gekennzeichnet, dass** mehrere Zuströmkanäle (12) in einer ersten Ebene aneinandergrenzend und mehrere Abströmkanäle (13) in einer hierzu parallelen zweiten Ebene aneinandergrenzend angeordnet sind.

5. Partikelfilter nach einem der Ansprüche 1 - 4, **dadurch gekennzeichnet, dass** der Beruhigungsraum (17) eine Klappe zum Entfernen der Asche (18) aufweist.

## Claims

1. A particulate filter for an internal combustion engine, comprising a monolithic porous filter body (10) having inflow channels (12) and outflow channels (13), each inflow channel (12) crossing at least one outflow channel (13) from which it is separated by a filtering wall (W1, W2, W3, W4), and the inflow channels (12) open into a settling chamber (17) which is an ash chamber for depositing the ash,
wherein the filter body (10) is arranged in a tubular housing (11) in which the inflow cannels (12) extend in the longitudinal direction of the housing, and the outflow channels (13) open into a space (20) in the housing (11) laterally beside the filter body (10), said space extending along the entire length of the housing (11),
**characterized in that**
the inflow channels (12) are tubes that pass through chambers (28, 29) without their walls contacting each other, said chambers forming the outflow channels (13).

2. The particulate filter of claim 1, **characterized in that**, in the tubular housing (11), the settling chamber (17) is arranged adjoining the outlet end (15) of the filter body (10).

3. The particulate filter of claim 1 or 2, **characterized in that** each outflow channel (13) crosses a plurality of inflow channels (12).

4. The particulate filter of one of claims 1 to 3, **characterized in that** a plurality of inflow channels (12) are arranged adjoining in a first plane and a plurality of outflow channels (13) are arranged adjoining in a second plane parallel to the first plane.

5. The particulate filter of one of claims 1-4, **characterized in that** the settling chamber (17) has a flap for removing the ash (18) therefrom.

## Revendications

1. Filtre à particules pour moteur à combustion interne, comprenant un corps de filtre poreux monolithique (10) qui présente des canaux d'entrée (12) et des canaux de sortie (13), chaque canal d'entrée (12) croisant au moins un canal de sortie (13) dont il est séparé par une paroi de filtre (W1, W2, W3, W4), et les canaux d'entrée (12) débouchant dans une chambre de stabilisation (17) qui est une chambre à cendre destinée au dépôt de la cendre,
le corps de filtre (10) étant disposé dans un boîtier tubulaire (11) dans lequel les canaux d'entrée (12) s'étendent dans la direction longitudinale du boîtier, et les canaux de sortie (13) débouchant dans une chambre (20) du boîtier (11) disposée latéralement à côté du corps de filtre (10) et qui s'étend sur toute la longueur du boîtier (11),
**caractérisé en ce que**
les canaux d'entrée (12) sont des tubes qui traversent, sans que leurs parois n'entrent mutuellement en contact, des chambres (28, 29) qui forment les canaux de sortie (13).

2. Filtre à particules selon la revendication 1, **caractérisé en ce que**, dans le boîtier tubulaire (11), la chambre de stabilisation (17) est disposée après l'extrémité de sortie (15) du corps de filtre (10).

3. Filtre à particules selon la revendication 1 ou 2, **caractérisé en ce que** chaque canal de sortie (13) croise plusieurs canaux d'entrée (12).

4. Filtre à particules selon l'une des revendications 1 à 3, **caractérisé en ce que** plusieurs canaux d'entrée (12) sont disposés de façon contiguë dans un premier plan et que plusieurs canaux de sortie (13) sont disposés de façon contiguë dans un second plan qui lui est parallèle.

5. Filtre à particules selon l'une des revendications 1 à 4, **caractérisé en ce que** la chambre de stabilisation (17) présente une trappe permettant l'évacuation de la cendre (18).
